# EUROPEAN PATENT SPECIFICATION

(11) **EP 1 246 707 B1**
(45) Date of publication and mention of the grant of the patent: **12.09.2007**
(21) Application number: 00960165.9
(22) Date of filing: 20.07.2000
(51) Int. Cl.: B23B 45/16, B25D 9/12

(54) **IMPACT TOOL**
SCHLAGWERKZEUG
OUTIL A IMPACTS

(30) Priority: 23.07.1999 US 359973
(43) Date of publication of application: 09.10.2002
(73) Proprietor: Clark Equipment Company, Montvale, NJ 07645 (US)
(72) Inventor: OTTESTAD, Jack, B., Genoa, NV 89411 (US)
(74) Representative: Vossius & Partner
(86) International application number: PCT/US2000/040434
(87) International publication number: WO 2001/007188

(56) References cited:
- US-A- 3 739 863
- US-A- 4 111 269
- US-A- 4 295 411
- US-A- 5 065 824
- US-A- 5 269 382

## Description

### BACKGROUND OF THE INVENTION

A percussive hammer for delivering repetitive impacts is driven by hydraulic oil, which is quickly applied under pressure derived from a system supply and from compressed gas.

Percussive hammers which deliver sharp impacts, usually for pavement breaking, ditch digging, spading and breaking of obsolete structures are well-known. They are characterized by Ottestad in US 4,111,269. This field has undergone extensive product development in the last few decades, and the functional product in many embodiments has been made and sold by a large number of well-established companies.

The common aim of these companies has been to develop a hammer which can deliver a stronger blow with least energy cost, longer product life between repairs and overhauls, reduction of the severity of circumstances that lead to early failure, lightness of product weight for the blows to be delivered, economy of manufacture, and ease of assembly and disassembly.

The concept of all of these devices is elegantly simple. A striking tool supported in the body is hit by an internal rapidly moving hammer to drive the tool (usually pointed, spade-shaped or a bucket), against a target toward which the tool is pointed or against which is pressed. The energy is delivered in a very short burst, so as to produce an impact with a steep force curve and sharp peak.

To drive the hammer, a volume of high pressure gas is compressed by a piston to a still higher pressure. The piston is driven by a charge of hydraulic fluid under pressure. For convenience this will hereafter be called "oil". The hammer is isolated from driving fluid pressure during the charge-operation, and is biased toward its returned position. When the device is triggered, the face of the hammer is quickly exposed to oil that is pressurized both by the force of the piston driven by the gas and the supply line pressure, which together drive the hammer to strike the tool.

The elegant simplicity of this concept belies the problems involved in designing and manufacturing an economical, effective, and long-lived device. The very rapid fluid flows, the need to stop the hammer without harming the device when the tool is fired "into the air", and especially the complexity of the parts (and their expense) required by previous designs testify to the difficulty of the task. The subject-matter of the present invention is defined by the features of the claims.

An impact tool according to the present invention includes a body having an internal passage with a longitudinal axis along which the parts of the tool move. It is the axis along which the blows are delivered.

A striking tool is reciprocally mounted in a bearing surface in the passage. A pin and slot arrangement allows the tool a suitable range of axial movement without falling out. The striking tool has a face to be hit by a hammer, thereby to drive the striking tool. This is the objective of the impact tool.

The hammer is axially slidably and sealingly fitted in the passage. It has a striking face to impact a face of the striking tool, and a driver face, which faces in the axial direction away from the striking tool.

A sleeve is fitted and fixed in the passage. An enlarged portion of the hammer slides in a central passage in the sleeve. A reduced portion of the hammer slides in a reduced portion of the body passage. The sleeve carries valving surfaces directed toward the drive face of the hammer, and other faces directed oppositely toward a reciprocable valve.

A reciprocable annular piston is slidably fitted into the passage. The passage is closed by an end cap so that the piston partially bounds a gas chamber on one of its faces and an oil chamber on its other face.

A tubular valve is reciprocably fitted in an aperture through the piston. Both the piston and the valve are thereby axially movable relative to the body and to each other.

A pressure port admits oil under pressure to the oil chamber. A drain port enables, when open, the release of oil from the oil chamber through the tubular valve.

The valve has valving surfaces which engage the valve-facing surfaces on the sleeve, and also valving surfaces which cooperate with the end cap.

The valve and piston include position-limiting means which establish important relative positions. The driving face of the hammer carries valving surfaces to maintain the hammer in its retracted condition until fired.

These features are provided in a construction requiring only a minimum number of readily manufactured parts which can be assembled in a way to require minimal effort to assemble the impact tool.

The above and other features of this invention will be fully understood from the following detailed description and the accompanying drawings, in which:
Fig. 1 is an axial cross-section of the presently-preferred embodiment of the invention. The illustrated portions being circular in lateral cross-section, showing the tool components in an arbitrary arrangement, the right hand edge of Fig. 1A directly matches the left-hand edge of Fig. 1 B ;
Figs. 2 - 4 are similar but partial axial cross-sections showing some elements in progressive orientations;
Fig. 5 is a fragmentary cross- section of portion 5-5 in Fig. 4:
Fig. 6 is a fragmentary cross-section of portion 6-6 in Fig. 4;
Figs. 7-10 are axial cross-sections showing the elements in further progressive orientations.
Fig. 11 is a cross-section of an optimum cross-pin for use in this invention. shown installed in the tool; and
Fig. 12 is a side view of the uncompressed cross-pin of Fig. 11

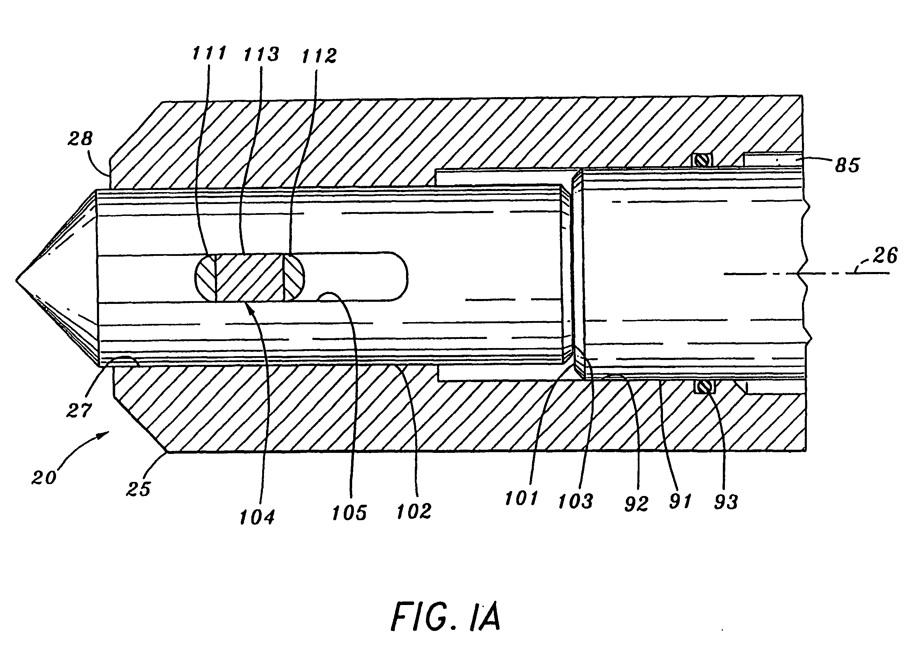

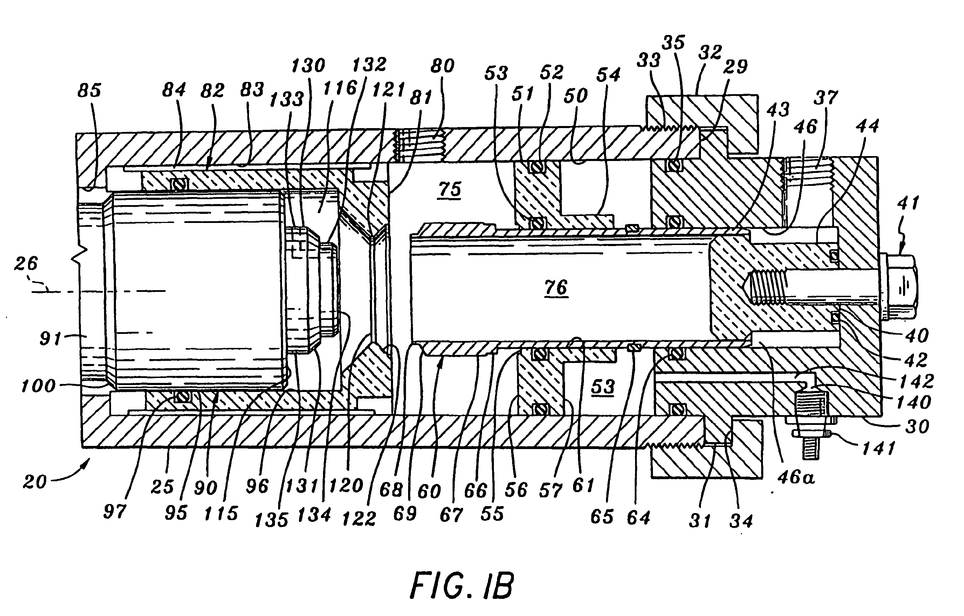

The impact tool 20 of this invention is shown in Fig. 1A and 1B, which should be read together. The parts in this figure are shown in arbitrary locations for purposes of illustration. The tool as shown is not under pressure or in any particular operating or repose condition. The parts are spaced apart in this drawing to facilitate showing of their structure.

Body 25 has a longitudinal axis 26, which is the axis of its operation and delivery of its blows. A longitudinal passage 27 extends from end to end of the body. It has various diameters for purposes to be explained. It has an open striker end 28 and a capped end 29 (1B).

An end cap 30 has a peripheral shoulder 31 which bears against end 29 of the body. An end cap nut 32 is threaded to the body by threads 33. It has a shoulder 34 which bears against shoulder 31 of the end cap. A seal 35 seals between the body and the end cap.

A drain port 37 passes through the side of the end cap, the end cap being cup-shaped. A drain plug 40 is held to the inside of the end cap with a bolt 41. A seal 42 is placed between the end plug and the inner wall of the end cap. The end plug includes a peripheral cylindrical drain valve surface 43, and a recessed peripheral surface 44 that forms a channel to drain port 37.

The end cap also carries a drain valve surface 46 opposite to drain valve surface 43. These are axially fixed relative to one another with a drain valve gap 46a between them.

Adjacent to the end cap and extending away from closed end 29, the passage has a piston bore 50, which is cylindrical and suitably smooth. A piston 51 is slidably fitted in the piston bore 50 with a piston body carrying seals 52,53 and an axially extending cylindrical skirt 54. A peripheral notch 55 is formed in face 56 of the piston for a reason to be disclosed. Face 57 of the piston faces into a gas chamber 58.

A tubular valve 60 is freely slidable in passage 61 in the piston. Seal 53 seals between them. This forms the closure of gas chamber 58, whose volume varies as a function of the axial location of the piston. The outer wall of the valve makes a sliding fit with drain valve surface 46 in the end cap. A seal 64 seals between them. This completes the closure of gas chamber 58.

A piston stop 65 formed as a ring seated in a groove in the outer wall of the valve member limits the travel of the piston into the gas chamber by being struck by the skirt of the piston.

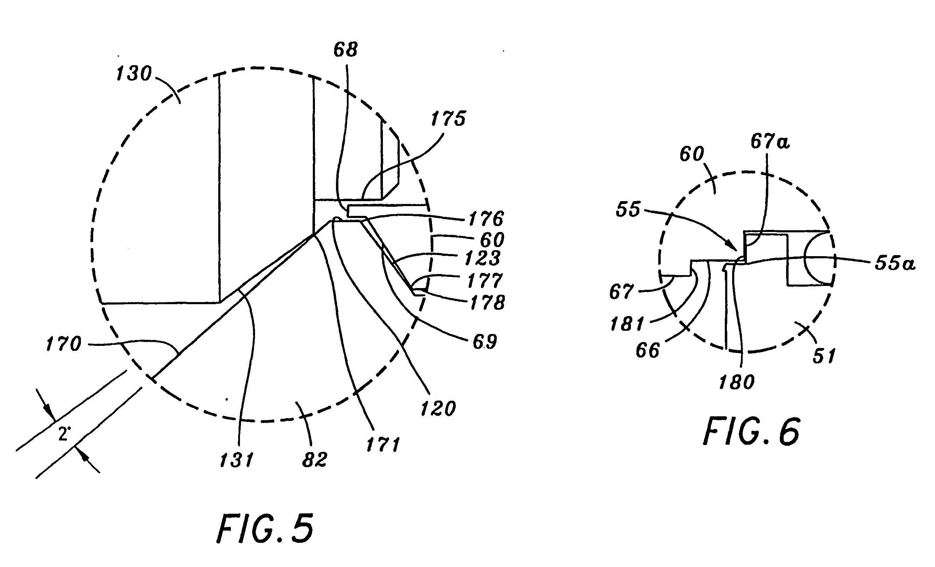

Steps 66 and 67 on the outer wall of the valve 60 are aligned with notch 55 on face 56 of the piston for purposes to be disclosed when Fig. 6 is discussed.

A valving lip 68 extends axially from the left hand end of the valve 60 in Fig. 1B. An orifice valving surface 69 is formed adjacent to it, as will be described later in fuller detail in Fig. 5.

At its other end, it will be observed that the valve 60 in the illustrated position can close the drain valve gap 46a between the end plug and the end cap. In that condition it will prevent flow between through gap 46a, drain passage 45, and drain port 37.

Pressure port 80 through the wall of the body enters oil pressure chamber 75. This chamber extends through the central passage 76 in the valve 60, around the valve as far as face 56 of the piston, and, when the valve 60 is closed, to face 81 of a valve sleeve 82.

Valve sleeve 82 is fixed in an enlarged portion 83 of the body passage. It does not reciprocate. A group of spline-like axial grooves 84 extends from end to end of sleeve 82. In turn these communicate with a peripheral deceleration groove 85 in the wall of the body passage for a purpose to be disclosed.

A hammer 90 having a reduced-diameter hammer head 91 (Fig. 1b) is slidably fitted in a hammer bore 92 in the wall of the body passage, with a sliding seal 93 between them. The hammer has an enlarged portion 95 which is slidingly fitted in a hammer bore 96 in valve sleeve 82. A seal 97 is placed between them.

A return shoulder 100 between portions 91 and 95 of the hammer faces into bore 85. The outer diameter of portion 95 is somewhat smaller than the diameter of bore 85, which allows for flow from the bore 85 into grooves 84 for deceleration and hammer return purposes yet to be described.

Hammer 90 has a striking face 101 facing striking tool 102. Striking tool 102 has a face 103 to receive blows from face 101. It is reciprocable in the body with limits of axial motion established by a cross-pin 104 that is fixed in the body, and the length of an axial slot 105 which passes through the striking tool.

While the cross-pin may have any suitable cross-section shape, they take considerable abuse in use, and such pins are often very difficult to remove, and are also troublesome to install.

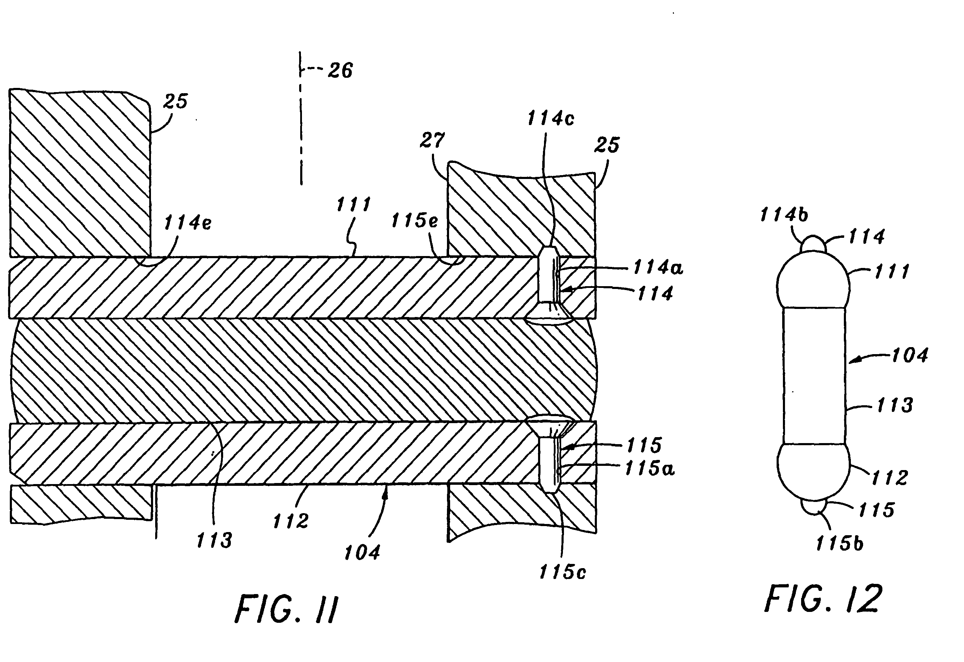

The cross-pin illustrated in Fig. 11 has considerable advantages. It comprises two parts 111,112. These parts are somewhat larger than semicircular, both having the same diameter, and a height greater than their radius. They are separated and joined together by a layer 113 of a stiff rubber or rubber-like material, such as tire tread material. The pins are glued to this layer by a suitable metal to rubber adhesive. Two headed counter sink type pins 114,115 have their rounded heads glued to the rubber layer 113 and their shanks passed through holes 114a, 115a in parts 111 and 112. Their shanks have rounded ends 114b and 115b for camming purposes. The ends of the shanks in repose project above the surface of the parts. If the shanks are pressed hard enough they can be moved inwardly enough to enable the pins to enter holes in the body and be received in recesses 114c ,115c. This will keep them in the recesses, and the cross-pin will be retained. A sharp blow will release them because their rounded-end shanks can be cammed out of the recesses, which also can be slanted in section. The rubber can be deformed to permit the amount of axial movement of the pins that is required. This entire structure can be squeezed into complementarily-shaped ports 114e, 115e in the wall of the body, and will be strongly retained by the expansive force of the rubber-like material. If preferred, a conventional circular pin may be used instead, without the intervening layer of rubber but this will rarely be preferred. The rubber layer 113 significantly reduces the noise compared to a solid metal pin.

It will be observed that the striking tool is freely slidable within limits established by the cross-pin and slot. It is struck by the hammer 90. Its location in the passageway will be determined by the position and orientation of the impact tool relative to its target. If the operator is pressing the tool against the target it will be pushed into the passageway. If it is not in contact with anything, it can be out as far as it can go. Then the hammer 90 must be decelerated to avoid self-destruction of the impact tool because of its over travel past the motion returned position of the striking tool. This feature will be fully discussed below.

Reverting now to valving sleeve 82, and specifically to its function, it will be seen that it faces both valve 60 and face 115 of the hammer 90. Its function is appropriately to provide for isolation of a drive chamber 116 from oil pressure chamber 75, and to enable flow between them at other times.

For these purposes an orifice 120 is formed in the end of cup-like sleeve 82. It has an orifice valving surface 121, complementary to lip 68 and, extending from it toward valve 60, a tapered valving surface 122, as more particularly shown in Fig. 5.

A valving head 130 is carried by portion 95 of the hammer. It includes two tapered surfaces 131,132 that are stepped apart. A vent passage 133 extends from face 134 to sidewall 135 for a purpose to be described and disclosed below.

A gas charge port 140 with a shut-off charge valve 141 gives access through a charge line 142 to gas chamber 58. A charge of a suitable gas such as nitrogen compressed to a desired pressure is injected into the gas chamber, and then the charge valve is closed until replacement gas is needed. This completes the general description of the parts. The operation of the tool will now be described, together with some further discussion of structure shapes.

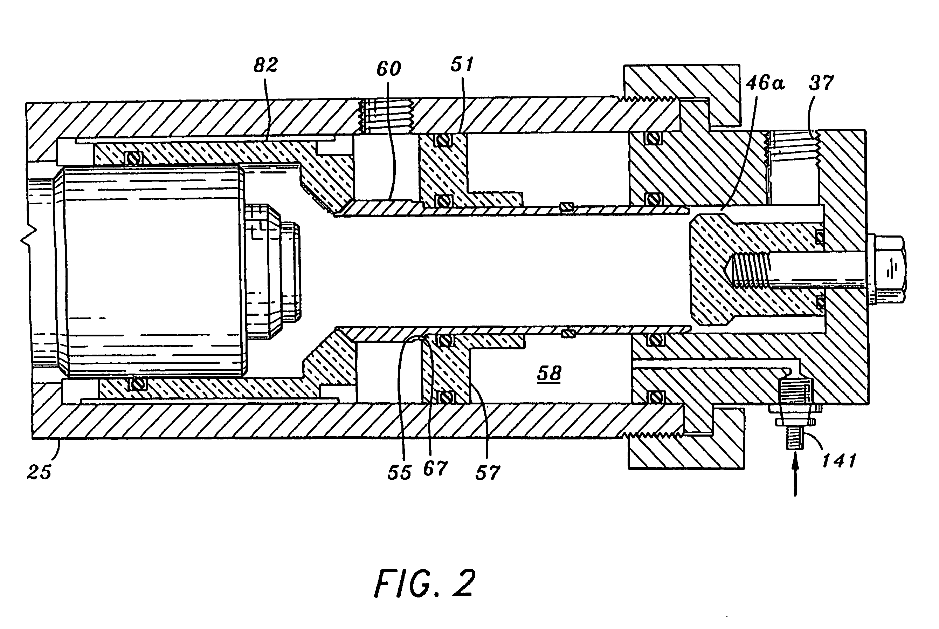

Fig. 2, which for convenience in illustration does not show the striking tool and much of the hammer 90, shows the impact tool being charged with gas. For this purpose, gas charge valve 141 has been opened and a charge of gas has been introduced. This will drive the piston to the left as illustrated. As will be described in more detail later, a surface of notch 55 engages a surface of step 67 on valve 60 (see Fig. 6). The force on face 57 of the piston drives the valve against sleeve 82 as shown.

The gas pressure is permitted to stabilize in the gas chamber, which is at its maximum volume at this time, and gas charge valve 141 is closed. The pressure at this condition is less than the available hydraulic line pressure, for example a gas pressure of 1,500 psi in its expanded condition, which when compressed will rise to about 1,800 psi. This will still be less than available oil line pressure, which will usually be about 2,000 psi.

This closes valve 60 at the valve sleeve 82 and leaves drain valve gap 46a open past the drain plug as shown. As yet, no oil pressure has been exerted. The impact tool is simply charged with gas and ready for use. This awaits the application of oil pressure. Until then the location of the hammer 90 and of the striking tool are arbitrary.

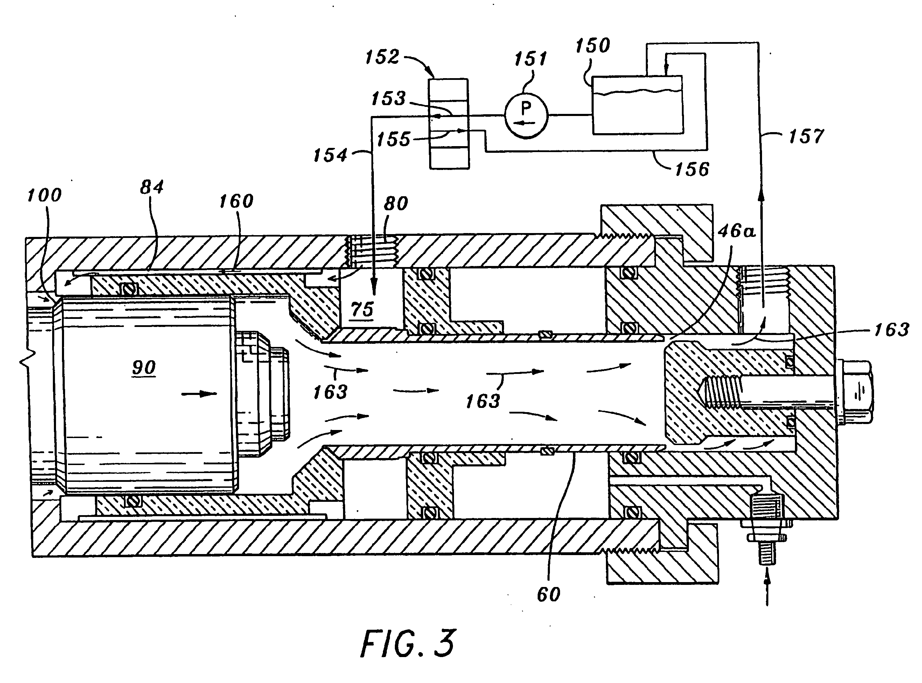

Fig. 3 illustrates the start of the firing sequence. To operate this impact tool, oil from a source 150 such as a reservoir of oil is passed through a pump 151 and a selector valve 152. The selector valve has two settings. Setting 153 supplies fluid under pressure to pressure port 80 through line 154. Setting 155 returns oil to the reservoir through line 156. The pump can continue to run and need not be turned off between blows, so that valve 152 acts as an operating control for the tool. By-passed fluid returns to the reservoir through drain line 156. Drain fluid from the tool returns to the reservoir through line 157.

With valve 60 closed at orifice 120, oil under pressure enters pressure chamber 75. Its flow is shown by arrows 160, through channels 84 to apply pressure on return shoulder 100 on the hammer 90. This forces the hammer away from the striking tool, and drives any oil in pressure chamber 75 ahead of it, through the drain valve 46a between valve 60 and drain plug 40. It will freely flow to the reservoir as shown by arrows 163. In this condition the hammer 90 is driven away from the striker tool. The striker tool remains wherever the operator arranges it.

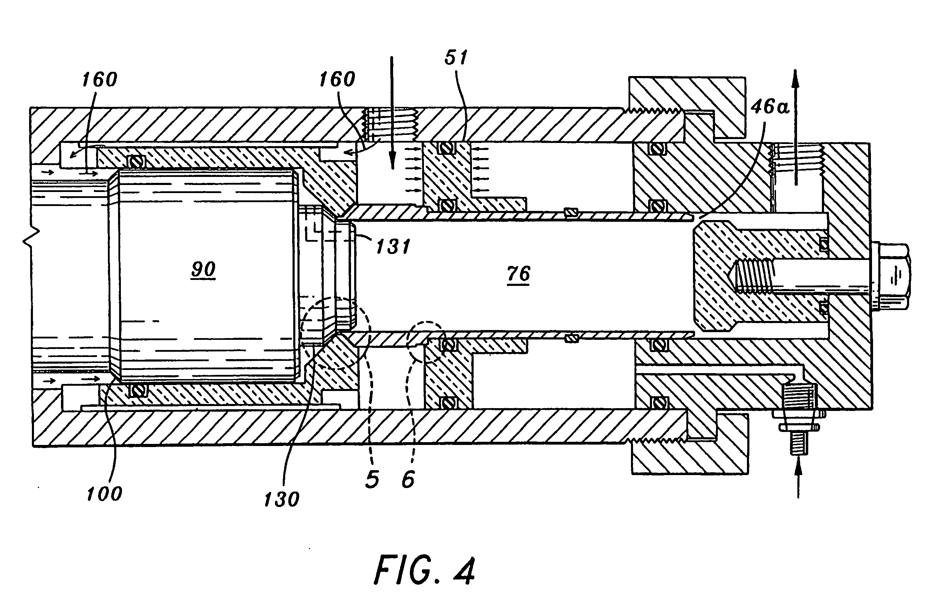

Fig. 4 shows the next operating step in which oil under pressure has continued to flow into pressure chamber 75. As shown by arrows 160, hammer 90 has been pressed strongly against sleeve 82 to form a seal with it. Valve 60 is still closed at this end, and gap 46a is open to drain, as is the tubular passage 76 in the valve. However, the hammer 90 has closed orifice 120.

Fig. 5 (which, with Fig. 6 is not section lined to facilitate its understanding) shows a frusto-conical seal 170 on sleeve 82. It faces toward seal 131 on the hammer, which also is frusto-conical. The half-angle of seal 131 is about 2 degrees smaller than the half angle of seal 170. Thus, a line seal 171 is made between the two. This will prevent a face-to-face lock between these two surfaces, and will facilitate their quick separation.

Further attention is called to another relationship to the spool 130 on the hammer 90. The lip 68 on valve 60 has entered orifice 120 with a small gap (clearance) 175,176 on both sides. In addition, sealing face 123 on the sleeve and 69 on valve 60 have different conical half angles, differing by about 2 degrees so that a line seal 177 is made between them. There is also a gap 178 between surfaces on the sleeve and on the valve. Thus, gaps 176 and 178 act as cushions to avoid potentially damaging hard contact between the valve and the sleeve.

Attention is also called to Fig. 6, further illustrating relationships between steps 67 and 68a on valve 60, and notch 55 on the piston. When shoulder 67a approaches face 55a of the notch, liquid between them will be metered out through a gap 180. This will avert too hard a blow between the piston and the valve when they abut one another.

Further, a prevailing bias force biasing the valve toward the sleeve 82 will be exerted on face 181 of step 68. This holds the valve closed and the drain valve open.

The foregoing should make it evident that when oil pressure is sufficiently exerted, the valve will be biased toward the sleeve, and the hammer 90 will be biased toward the orifice. The orifice is now closed from both sides.

Continuing introduction of oil will move the piston 51 into the gas chamber to compress the gas in it. The stored energy in the gas chamber is a function of the initial pressure of the gas on the piston 51, plus the small incremental increase caused by the change of volume. This is limited by how far the piston can move.

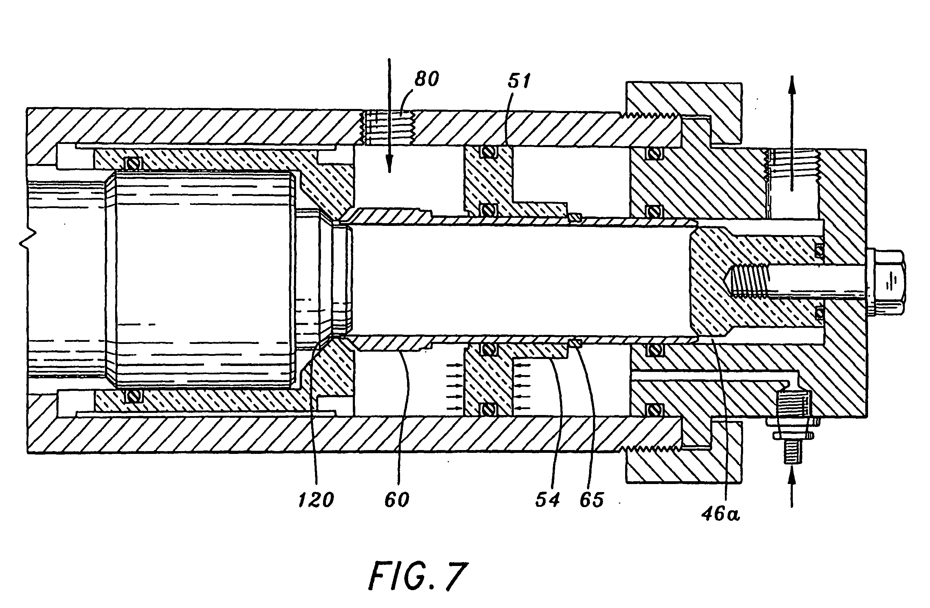

Ultimately it is intended that the end of piston skirt 54 will strike limit ring 65. As shown in Fig. 7, the net force on the piston 51 can move the valve off of the sleeve, thereby opening orifice 120. This movement of the valve will close the drain gap 46a between the drain plug and the end cap and close the drain.

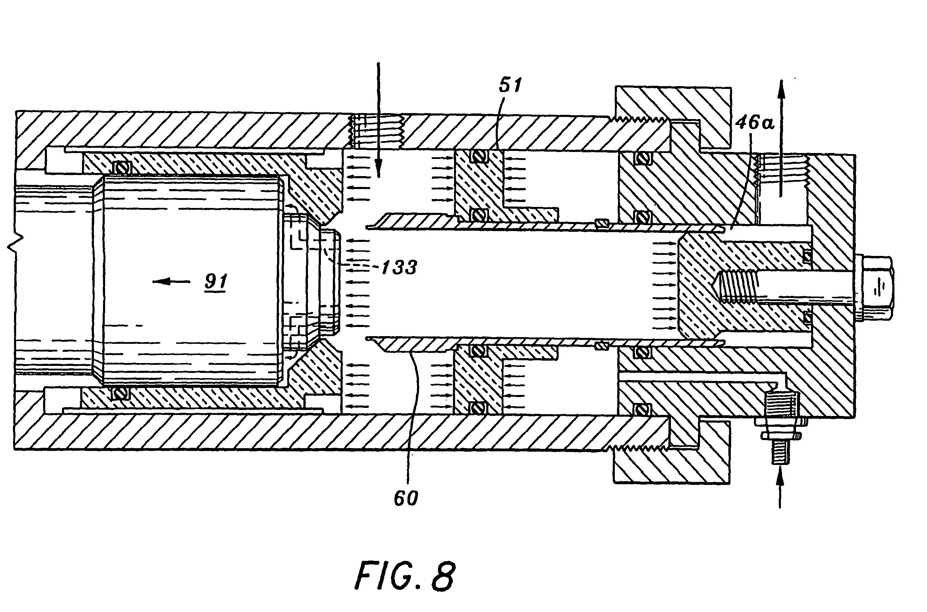

High pressure oil will now rush through the orifice, and will drive the valve full open as shown in Fig. 8. The hammer head now sees full oil pressure across its entire face, directly on the central portion, and through by-pass passage 133. The applied oil pressure comes both from this incoming supply and from the displacement of the piston.

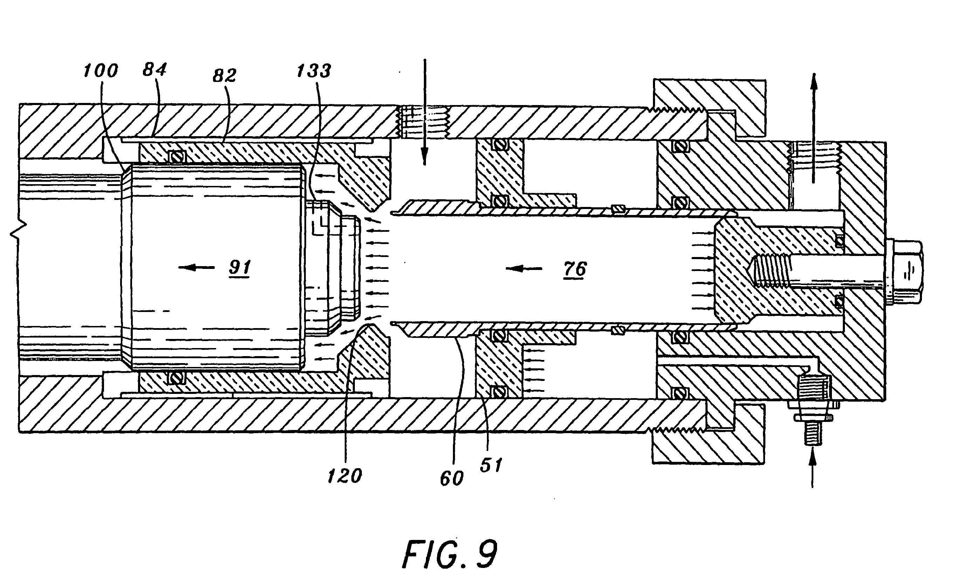

As shown in Fig. 9, the hammer 90 is being driven by the oil, and the valve is being driven by the piston toward the .orifice. This driving stroke will continue until valve 60 again closes orifice 120 and opens drain valve gap 46a. Gap 46a remains closed until the closure of the sleeve to enable the driving to continue. It will open when the valve 60 closes orifice 120 to enable the piston to return. This is the driving stroke, intended to send the hammer flying to strike the striking tool. This is the anticipated blow which is the ultimate objective of the tool.

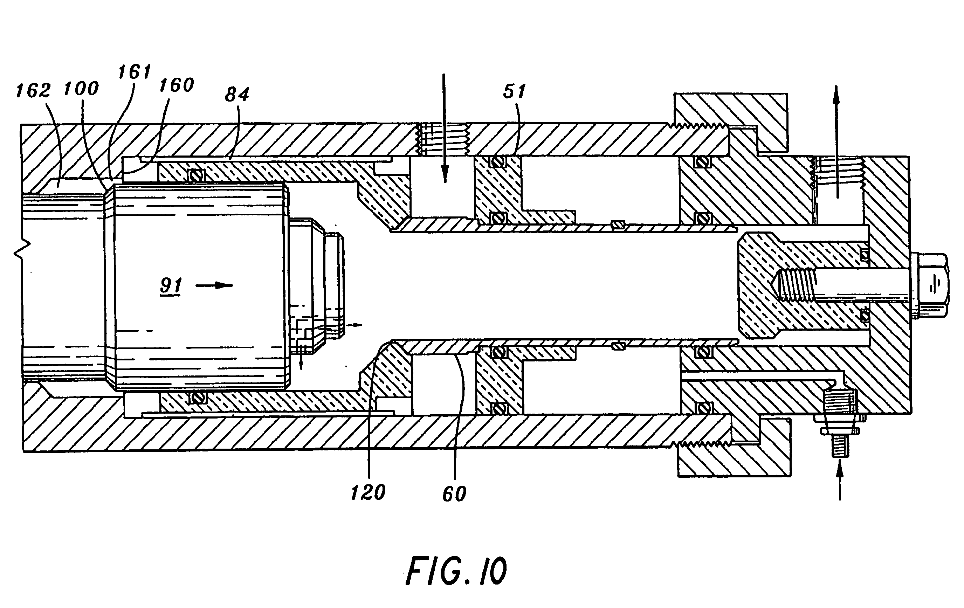

Fig. 10 shows the condition at the intended end of the driving stroke. Valve 60 is closed on the orifice, the hammer has struck the striking tool. The return shoulder 100 on the hammer has passed edge 160, leaving a gap 161 between the hammer and the inside wall of deceleration chamber 162. Further travel of the hammer is resisted by the need to displace fluid through this gap on opposition to oil pressure from the continuing supply. When shoulder 100 passes edge 160 it is fully exposed to pressure oil through channel 84. This continues as a bias force on the hammer to return it.

Therefore if the hammer 90 did not strike the striking tool at the most retracted, the tool will be decelerated by all of these forces. The deceleration travel is from 4 to 8 times that of the driving stroke so that potentially damaging overtravel is avoided.

Now the procedure will be repeated so long as oil pressure is supplied to the tool. It can be continuous (cycled) by holding the control valve in its open setting. It will stop when the valve setting is changed. It can be fired simply by briefly opening the control valve.

The reader will observe the elegant simplicity of this design, and of the small number of parts, and especially the absence of tie rods. The use of tie rods to hold a percussive tool together leads to complications of extra weight stretching and bending, and difficulty in assembly and repair.

The tool of this invention uses only conveniently-manufactured circularly-sectioned parts, readily made by turning, broaching, and milling operations. The assembly is held together only by a threaded cap. It is circularly sectioned.

Assembly of this tool can be completed in only a few minutes, as can its disassembly for repair, with the use of simple tools. Conventional tools generally take hours for this procedure and require very strong and special tooling for the task.

The illustrated impact tool, which is circularly sectioned, utilizes a hammer whose larger diameter is about 152 mm (6 inches). Other dimensions can be scaled from it on the drawings. The materials of construction are conventional, generally a high grade steel for the impacting parts. If desired the hammer can be made in two parts, its valving surfaces made of lighter, and more compliant material. The seals can be any suitable type. An oil supply pressure of about 13,8 MPa (2,000 psi) and a gas pressure of about 10,3 MPa (1,500 psi) when the piston is extended are appropriate. With this tool, a blow of approximately 678 Nm (500 foot pounds) can be delivered by a hammer traveling about 12,7mm (1/2 inch).

This improved impact hammer has a number of unique features which contribute to its longevity, convenience of use, and energy economy. Some of these are as follows:
1. The driving pressure from the gas chamber matches the incoming oil supply pressure, so there is no amplification of gas pressure, as required by many prior art devices.
2. During the power stroke, pressure oil continues to feed the tool. The oil supply remains constant, thereby substantially eliminating pressure cycling.
3. The blow energy can be selected and regulated by changing the gas pressure in the gas chamber.
4. When near the end of its power stroke, the fluid driving force is shut off from the hammer so that acceleration of the hammer stops just before the impact on the striking tool. This eliminates "kick-off".
5. This tool can operate against a higher drain pressure. Hydraulic systems in this field are not vented. Instead their drain (reservoir) pressures are on the hundreds of pounds per square inch. This tool is insensitive to such high back pressures.
6. There is no drop-off of incoming oil pressure during the charging stroke when the piston is forced toward the gas chamber. Thus there is less hose pulsing- the tendency of hoses to kick around when pressures are pulsed.
7. Cavitation is greatly reduced by the fact that hydraulic pressure remains at nearly constant. Cavitation tends to occur when there are rapid flows through gaps and orifices under substantial pressure differentials.
8. If the hammer does not strike the impact tool, there is a reduction of energy as the head is decelerated and returned. This can save considerable energy, because it returns oil to move the piston.

This invention is not to be limited by the embodiments shown in the drawings and described in the description, which are given by way of example and not of limitation, but only in accordance with the scope of the appended claims.

Although the present invention has been described with reference to preferred embodiments, workers skilled in the art will recognize that changes may be made in form and detail without departing from the scope of the invention as defined in the claims.

## Claims

1. An impact tool (20) comprising:
a body (25) having a longitudinal axis (26), a central longitudinal passage (27), a striking end (28) and a closed end (29) ;
a striking tool (102) reciprocally mounted in said passage (27);
a hammer (90) reciprocally mounted in said passage (27) so disposed and arranged as to strike the striking tool (102) in one direction of movement;
a valving sleeve (82) fixed in said passage, a portion of said hammer (90) being reciprocally and sealing fitted in an interior bore (96) of said valving sleeve (82), said valving sleeve (82) including an orifice (120) at one end and an axial channel (184) extending along the outside of the valving sleeve (82) and open to the interior of the valving sleeve ;
said hammer (90) having a sealing surface (131, 132) for sealing the orifice (120) on a first interior surface (171) defining the orifice in the valving sleeve (82) and having a surface (100) spaced from the sealing surface (131, 132) and open to the axial channel (184) ;
an axially reciprocable tubular valve (60) in the passage (27), between the valving sleeve (82) and the closed end (29) and having an outer wall spaced from the wall of the body (25) ;
a piston (51) slidably and sealingly fitted between the wall of the body (25) and the outer wall of the reciprocable valve (60), said piston (51) being slidable on said reciprocable valve (60), and a stop (65) to limit movement of the piston (51) in a direction toward the closed end (29) along the reciprocable valve (60);
a lip (68) on an end of said reciprocable valve (60), proportioned to enter said orifice (120) and leaving a gap around the lip (68), and a seal shoulder (69) adjacent the lip (68) sealing on a second outer surface (122) defining the orifice (120) in the valving sleeve (60) ;
the outer wall of said reciprocable valve having a step (66, 67) engagable with a notch in said piston (51) ;
said reciprocable valve (60) and a first face (57) of the piston (51) forming a gas chamber (58) to hold a charge of gas under elevated pressure at the closed end (89) of the passage (27) ;
an annular drain channel (43, 44) adjacent the closed end (29) of the passage (27), said reciprocable valve (60) having a portion which enters said drain channel (43, 44) to close the drain channel (43, 44) when the reciprocable valve (60) moves toward the closed end (29);
a pressure port (80) to admit oil under elevated pressure into an oil chamber (75) on the opposite side of the orifice (120) in the valving sleeve (82) from the hammer (90), a second face (56) of the piston (51) facing into and forming a wall of the oil chamber (75) ;
wherein the impact tool is designed so that gas under elevated pressure charged into said gas chamber (75), causing said piston (51) to engage the stop (65) and move said reciprocable valve (60) to close the second surface (121) of the orifice (120), such that oil under pressure admitted to the oil chamber (75) forces the hammer seal (131, 132) on the first surface (121) of the orifice (120) to close the orifice (120) in the valving sleeve (82) ;
the piston (51) is adapted for being moved by oil pressure against he stop (65) on the reciprocable valve (60) to move the reciprocable valve (60) away from the orifice (120) to close the oil drain channel (43, 44) such that oil pressure drives the hammer (90) toward the striking tool 102, the charge gas action on the piston (51) returning the reciprocable valve (60) to close the second surface (122) of the orifice, and open the drain channel (43, 44) oil pressure provided to the axial channel (184) acting to return the hammer (90) to engage the first surface (121) of the orifice (120) as oil drains through an interior of the reciprocable valve (60) and the drain channel (43, 44).

2. An impact tool (20) according to claim 1 in which said passage (27) includes a deceleration groove (162) always in communication with a return shoulder (100) formed on the hammer (90).

3. An impact tool (20) according to claim 1 in which said hammer (90) has an end face (134) facing toward the orifice (120), and a vent passage (133) extending from said end face (134) to a location on the side of said hammer (90) on the other side of the sealing surface (131, 132) on said hammer (90).

4. An impact tool (20) according to claim 3 in which the first surface (121) defining said orifice (120) on the valving sleeve (82) is a first frusto-conical surface facing the hammer (90), and the sealing surface (131) on the hammer (90) facing the orifice; (120) is a second frusto-conical surface, with a different half conical angle from the first frusto-conical surface.

5. An impact tool (20) according to claim 1 in which said seal shoulder (69) on the end of said reciprocable valve (60) and the second outer surface (171) defining said orifice (20) are both frusto-conical, with different half conical angles from one another.

6. An impact tool (20) according to claim 5 in which said first surface (121) defining the orifice (20) in the valving sleeve (82) and the sealing surface (131) of the hammer (90) facing the first surface (121) defining the orifice (20) are both frusto-conical, with a different half conical angle from one another.

7. An impact tool (20) according to claim 1 in which closing of the orifice (120) by the reciprocable valve (60) is alternative to the closure of the drain channel (43, 44) by the reciprocable valve (60) at the drain channel (43, 44)

8. An impact tool (20) according to claim 1 in which said drain channel (43, 44) discharges to a close reservoir (150), and in which a continuously operating pump (151) withdraws oils from said reservoir (150) and delivers it to said pressure port (80) under constant pressure, and in which a selector valve (152) downstream from said pump (151) passes said oil alternately to said pressure port (82) and to the reservoir (150).

9. An impact tool according to claim 1 in which said body (25) includes a central passage (27) with a peripheral wall, a cross-passage (114e, 115e) through said wall (151) and the striking tool (102) in said passage (27) includes a cross-slot (105), and in which a cross-pin (104) extends through said cross-passage (114e, 115e) and cross-slot (105), said cross pin (104) comprising: metal parts (111, 112) each having a dimension of length, a curved outer longitudinal surface and a flat surface, and a rubber-like layer (113) having a pair of opposite surfaces to which said flat surfaces are adhered, and in which the cross-pin (104) had a dimension of height when uncompressed and can be compressed to a lesser height to enter the cross-passage (114e, 115e).

10. An impact tool (20) according to claim 9 in which each said metal part (111, 112) has a hole (114a, 115a) therethrough, and in which a pin (114, 115) with a head and a shank with a rounded end is placed with its shank in a said hole (114a, 115a) with its head against the layer (113) and its shank projecting beyond its metal part (111, 112), whereby the shank is retractable into the hole (114a, 115a) sufficiently to enable the pin (114, 115) to be cammed into the metal part (111, 112) to enable the insertion of the cross-pin (104), and thereafter extended into an internal recess in the impact tool (20).

## Patentansprüche

1. Schlagwerkzeug (20) mit:
einem Körper (25) mit einer Längsachse (26), einem sich in Längsrichtung erstreckenden Mitteldurchlass (27), einem Schlagende (28) und einem geschlossenen Ende (29);
einem im Durchlass (27) hin- und hergehend beweglich angeordneten Schlagwerkzeugelement (102);
einem im Durchlass (27) hin- und hergehend beweglich angeordneten Hammer (90), der derart angeordnet ist, dass er in einer Bewegungsrichtung auf das Schlagwerkzeugelement (102) auftrifft;
einer im Durchlass fixierten Ventilbuchse (82), wobei ein Abschnitt des Hammers (90) in einer Innenbohrung (96) der Ventilbuchse (82) hin- und hergehend beweglich und dicht eingepasst ist, wobei die Ventilbuchse (82) eine Öffnung (120) an einem Ende und einen axialen Kanal (184) aufweist, der sich entlang der Außenseite der Ventilbuchse (82) erstreckt und zum Inneren der Ventilbuchse offen ist;
wobei der Hammer (90) eine Dichtungsfläche (131, 132) zum Dichten der Öffnung (120) auf einer ersten Innenfläche (171) aufweist, die die Öffnung in der Ventilbuchse (82) definiert und eine Fläche (100) aufweist, die von der Dichtungsfläche (131, 132) beabstandet und zum axialen Kanal (184) offen ist;
einem axial hin- und hergehend beweglichen rohrförmigen Ventil (60) im Durchlass (27) zwischen der Ventilbuchse (82) und dem geschlossenen Ende (29) und mit einer von der Wand des Körpers (25) beabstandeten Außenwand;
einem zwischen der Wand des Körpers (25) und der Außenwand des hin- und hergehend beweglichen Ventils (60) gleitend und dicht eingepassten Kolben (51), wobei der Kolben (51) auf dem hin- und hergehend beweglichen Ventil (60) gleitend angeordnet ist;
einem Anschlag (65) zum Begrenzen der Bewegung des Kolbens (51) in einer Richtung zum geschlossenen Ende (29) hin entlang des hin- und hergehend beweglichen Ventils (60);
einem Ansatz (68) auf einem Ende des hin- und hergehend beweglichen Ventils (60), der derart dimensioniert ist, dass er in die Öffnung (120) eintritt, so das ein Spalt um den Ansatz (68) entsteht; und
einer dem Ansatz (68) benachbarten Dichtungsschulter (69), die auf einer zweiten Außenfläche (122) dichtet, die die Öffnung (120) in der Ventilbuchse (60) definiert;
wobei die Außenwand des hin- und hergehend beweglichen Ventils eine Stufe (66, 67) aufweist, die dazu geeignet ist, mit einer Nut im Kolben (51) in Eingriff zu kommen;
wobei das hin- und hergehend bewegliche Ventil (60) und eine erste Fläche (57) des Kolbens (51) eine Gaskammer (58) zum Halten einer Gasladung unter einem erhöhten Druck am geschlossenen Ende (89) des Durchlasses (27) bilden;
einem dem geschlossenen Ende (29) des Durchlasses (27) benachbarten ringförmigen Auslasskanal (43, 44), wobei das hin- und hergehend bewegliche Ventil (60) einen Abschnitt aufweist, der in den Auslasskanal (43, 44) eintritt, um den Auslasskanal (43, 44) zu schließen, wenn das hin- und hergehend bewegliche Ventil (60) zum geschlossenen Ende (29) hin bewegt wird;
einem Druckport (80) zum Zuführen von Öl unter einem erhöhten Druck in eine Ölkammer (75) auf der bezüglich des Hammers (90) entgegengesetzten Seite der Öffnung (120) in der Ventilbuchse (82), wobei eine zweite Fläche (56) des Kolbens (51) der Ölkammer (75) zugewandt ist und eine Wand der Ölkammer bildet;
wobei das Schlagwerkzeug derart konstruiert ist, dass
Gas unter einem erhöhten Druck in die Gaskammer (75) geladen wird, wodurch veranlasst wird, dass der Kolben (51) mit dem Anschlag (65) in Eingriff kommt und das hin- und hergehend bewegliche Ventil (60) bewegt wird, um die zweite Fläche (121) der Öffnung (120) zu schließen, so dass die Hammerdichtung (131, 132) durch das der Ölkammer (75) zugeführte Öl unter einem erhöhten Druck auf die erste Fläche (121) der Öffnung (120) gezwungen wird, um die Öffnung (120) in der Ventilbuchse (82) zu schließen;
wobei der Kolben (51) dazu geeignet ist, durch einen Öldruck gegen den Anschlag (65) auf dem hin- und hergehend beweglichen Ventil (60) bewegt zu werden, um das hin- und hergehend bewegliche Ventil (60) von der Öffnung (120) weg zu bewegen, um den Ölauslasskanal (43, 44) zu schließen, so dass der Hammer (90) durch Öldruck zum Schlagwerkzeugelement (102) hin bewegt wird, das hin- und hergehend bewegliche Ventil (60) durch den Ladegasdruck auf den Kolben (51) zurückbewegt wird, um die zweite Fläche (122) der Öffnung zu schließen und den Auslasskanal (43, 44) zu öffnen, wobei der dem axialen Kanal (184) zugeführte Öldruck dazu dient, den Hammer (90) zurückzubewegen, so dass er mit der ersten Fläche (121) der Öffnung (120) in Eingriff kommt, weil Öl durch einen Innenraum des hin- und hergehend beweglichen Ventils (60) und den Auslasskanal (43, 44) abfließt.

2. Schlagwerkzeug (20) nach Anspruch 1, wobei der Durchlass (27) eine Verzögerungsnut (162) aufweist, die permanent mit einer auf dem Hammer (90) ausgebildeten Rückstellschulter (100) kommuniziert.

3. Schlagwerkzeug (20) nach Anspruch 1, wobei der Hammer (90) eine der Öffnung (120) zugewandte Endfläche (134) und einen Ventilkanal (133) aufweist, der sich von der Endfläche (134) zu einer Position auf der Seite des Hammers (90) auf der anderen Seite der Dichtungsfläche (131, 132) auf dem Hammer (90) erstreckt.

4. Schlagwerkzeug (20) nach Anspruch 3, wobei die die Öffnung (120) auf der Ventilbuchse (82) definierende erste Fläche (121) eine dem Hammer (90) zugewandte erste kegelstumpfförmige Fläche ist, und wobei die der Öffnung (120) zugewandte Dichtungsfläche (131) auf dem Hammer eine zweite kegelstumpfförmige Fläche mit einem bezüglich der ersten kegelstumpfförmigen Fläche anderen Kegel-Halbwinkel ist.

5. Schlagwerkzeug (20) nach Anspruch 1, wobei die Dichtungsschulter (69) auf dem Ende des hin- und hergehend beweglichen Ventils (60) und die die Öffnung (20) definierende zweite Außenfläche (171) beide kegelstumpfförmig ausgebildet sind und voneinander verschiedene Kegel-Halbwinkel aufweisen.

6. Schlagwerkzeug (20) nach Anspruch 5, wobei die die Öffnung (20) in der Ventilbuchse (82) definierende erste Fläche (121) und die der ersten Fläche (121) zugewandte Dichtungsfläche (131) des Hammers (90), die die Öffnung (20) definiert, beide kegelstumpfförmig ausgebildet sind und voneinander verschiedene Kegel-Halbwinkel aufweisen.

7. Schlagwerkzeug (20) nach Anspruch 1, wobei das Verschließen der Öffnung (120) durch das hin- und hergehend bewegliche Ventil (60) und das Verschließen des Auslasskanals (43, 44) durch das hin- und hergehende Ventil (60) am Auslasskanal (43, 44) alternativ sind.

8. Schlagwerkzeug (20) nach Anspruch 1, wobei der Auslasskanal (43, 44) zu einem Verschlussbehälter (150) führt, in dem eine kontinuierlich betriebene Pumpe (151) Öl vom Behälter (150) ansaugt und dem Druckport (80) unter einem konstanten Druck zuführt, und wobei ein stromabwärts von der Pumpe (151) angeordnetes Auswahlventil (152) das Öl dem Druckport (82) und dem Behälter (150) alternierend zuführt.

9. Schlagwerkzeug nach Anspruch 1, wobei der Körper (25) einen Mitteldurchlass (27) mit einer Umfangswand und einen Querdurchlass (114e, 115e) durch die Wand (151) aufweist, und wobei das Schlagwerkzeugelement (102) im Durchlass (27) einen Querschlitz (105) aufweist, wobei sich ein Querbolzen (104) durch den Querdurchlass (114e, 115e) und den Querschlitz (105) erstreckt, wobei der Querbolzen (104) aufweist: Metallteile (111, 112), die jeweils eine Längenabmessung, eine gekrümmte Außen-Längsfläche und eine erste flache Fläche aufweisen, und eine gummiähnliche Schicht (113) mit einem Paar gegenüberliegenden Flächen, mit denen die flachen Flächen verklebt sind, wobei der Querbolzen (104) im unkomprimierten Zustand eine Höhenabmessung hat und auf eine kleinere Höhe komprimiert werden kann, so dass er in den Querdurchlass (114e, 115e) eintreten kann.

10. Schlagwerkzeug (20) nach Anspruch 9, wobei jedes der Metallteile (111, 112) eine sich durch das Metallteil hindurch erstreckende Öffnung (114a, 115a) aufweist, wobei ein Bolzen (114, 115) mit einem Kopf und einem Schaft mit einem abgerundeten Ende mit seinem Schaft in der Öffnung (114a, 115a) angeordnet wird, so dass der Kopf an der Schicht (113) anliegt und der Schaft über das Metallteil (111, 112) hinausragt, so dass der Schaft in ausreichendem Maße in die Öffnung (114a, 115a) zurück bewegt werden kann, um zu ermöglichen, dass der Bolzen (114, 115) mit dem Metallteil (111, 112) in Eingriff kommt, so dass der Querbolzen (104) eingeführt werden kann und sich anschließend in eine innere Vertiefung im Schlagwerkzeug (20) erweitert.

## Revendications

1. Outil d'impact (20) comprenant :
un corps (25) comprenant un axe longitudinal (26), un passage longitudinal central (27), une extrémité de frappe (28) et une extrémité fermée (29) ;
un outil de frappe (102) monté de manière mobile alternativement dans ledit passage (27) ;
un marteau (90) monté de manière mobile alternativement dans ledit passage (27), disposé et conçu de façon à frapper l'outil de frappe (102), dans une direction de déplacement ;
un manchon de soupape (82) fixé dans ledit passage, une portion dudit marteau (90) étant insérée de manière mobile alternativement et étanche dans un alésage intérieur (96) dudit manchon de soupape (82), ledit manchon de soupape (82) comprenant un orifice (120) au niveau d'une extrémité et un canal axial (184) s'étendant le long de l'extérieur du manchon de soupape (82) et ouvert vers l'intérieur du manchon mobile ;
ledit marteau (90) comprenant une surface d'étanchéité (131, 132) permettant d'étanchéifier l'orifice (120) sur une première surface intérieure (171) définissant l'orifice dans le manchon de soupape (82) et ayant une surface (100) espacée de la surface d'étanchéité (131, 132) et ouverte vers le canal axial (184) ;
une soupape tubulaire à mouvement alternatif axial (60) dans le passage (27), entre le manchon de soupape (82) et l'extrémité fermée (29), et ayant une paroi externe espacée de la paroi du corps (25) ;
un piston (51) inséré de manière coulissante et étanche entre la paroi du corps (25) et la paroi externe de la soupape à mouvement alternatif (60), ledit piston (51) étant coulissant sur ladite soupape à mouvement alternatif (60), et une butée (65) permettant de limiter le mouvement du piston (51) en direction de l'extrémité fermée (29) le long de la soupape à mouvement alternatif (60) ;
une lèvre (68) sur une extrémité de ladite soupape à mouvement alternatif (60), dimensionnée de façon à entrer dans ledit orifice (120) en laissant un espace autour de la lèvre (68), et un épaulement d'étanchéité (69) adjacent à la lèvre (68), monté de manière étanche sur une seconde surface externe (122) définissant l'orifice (120) dans le manchon mobile (60) ;
la paroi externe de ladite soupape à mouvement alternatif présentant un échelon (66, 67) pouvant être emboîté avec une encoche dans ledit piston (51) ;
ladite soupape à mouvement alternatif (60) et une première face (57) du piston (51) formant une chambre de gaz (58) contenant une charge de gaz à haute pression au niveau de l'extrémité fermée (89) du passage (27) ;
un canal de drainage annulaire (43, 44) adjacent à l'extrémité fermée (29) du passage (27), ladite soupape à mouvement alternatif (60) ayant une portion qui entre dans ledit canal de drainage (43, 44) pour fermer le canal de drainage (43, 44) lorsque la soupape à mouvement alternatif (60) se déplace en direction de l'extrémité fermée (29) ;
un orifice de pression (80) permettant une admission d'huile à haute pression dans une chambre à huile (75) sur le côté opposé de l'orifice (120) dans le manchon de soupape (82) à partir du marteau (90), une seconde face (56) du piston (51) faisant face à et formant une paroi de la chambre à huile (75);
l'outil d'impact étant conçu de façon à ce que du gaz à haute pression soit chargé dans ladite chambre de gaz (75), ce qui provoque l'emboîtement dudit piston (51) avec la butée (65) et le déplacement de ladite soupape à mouvement alternatif (60) pour fermer la seconde surface (121) de l'orifice (120), de façon à ce que l'huile sous pression admise dans la chambre à huile (75) force le joint d'étanchéité du marteau (131, 132) sur la première surface (121) de l'orifice (120) à fermer l'orifice (120) dans le manchon de soupape (82) ;
le piston (51) étant conçu pour être déplacé par la pression de l'huile contre la butée (65) sur la soupape à mouvement alternatif (60) afin d'éloigner la soupape à mouvement alternatif (60) de l'orifice (120) pour fermer le canal de drainage d'huile (43, 44) de façon à ce que la pression d'huile entraîne le marteau (90) en direction de l'outil de frappe (102), l'action du gaz de charge sur le piston (51) provoquant le retour de la soupape à mouvement alternatif (60) pour fermer la seconde surface (122) de l'orifice et pour ouvrir le canal de drainage (43, 44), la pression d'huile générée dans le canal axial (184) agissant de façon à provoquer le retour du marteau (90) afin qu'il s'emboîte avec la première surface (121) de l'orifice (120) lorsque l'huile passe à travers l'intérieur de la soupape à mouvement alternatif (60) et le canal de drainage (43, 44).

2. Outil d'impact (20) selon la revendication 1, dans lequel ledit passage (27) comprend une gorge de décélération (162) toujours en communication avec un épaulement de retour (100) formé sur le marteau (90).

3. Outil d'impact (20) selon la revendication 1, dans lequel ledit marteau (90) comprend une face d'extrémité (134) orientée en direction de l'orifice (120), et un passage de ventilation (133) qui s'étend de ladite face d'extrémité (134) vers un endroit sur le côté dudit marteau (90) sur l'autre côté de la surface d'étanchéité (131, 132) dudit marteau (90).

4. Outil d'impact (20) selon la revendication 3, dans lequel la première surface (121) définissant ledit orifice (120) sur le manchon de soupape (82) est une première surface tronconique orientée vers le marteau (90) et la surface d'étanchéité (131) du marteau (90), orientée en direction de l'orifice (120), est une seconde surface tronconique avec un demi-angle de conicité différent de celui de la première surface tronconique.

5. Outil d'impact (20) selon la revendication 1, dans lequel ledit épaulement d'étanchéité (69) sur l'extrémité de ladite soupape à mouvement alternatif (60) ainsi que la seconde surface externe (171) définissant ledit orifice (20) sont tous les deux tronconiques, avec des demi-angles de conicité différents.

6. Outil d'impact (20) selon la revendication 5, dans lequel ladite première surface (121) définissant l'orifice (20) dans le manchon de soupape (82) ainsi que la surface d'étanchéité (131) du marteau (90), orientée vers la première surface (121) définissant l'orifice (20), sont toutes les deux tronconiques, avec des demi-angles de conicité différents.

7. Outil d'impact (20) selon la revendication 1, dans lequel la fermeture de l'orifice (120) par la soupape à mouvement alternatif (60) et la fermeture du canal de drainage (43, 44) par la soupape à mouvement alternatif (60) au niveau du canal de drainage (43, 44) sont alternatives.

8. Outil d'impact (20) selon la revendication 1, dans lequel ledit canal de drainage (43, 44) débouche sur un réservoir fermé (150), dans lequel une pompe (151) fonctionnant en continu aspire l'huile dudit réservoir (150) et l'amène vers ledit orifice de pression (80) sous une pression constante et dans lequel une soupape de sélection (152), en aval de ladite pompe (151) envoie ladite huile alternativement vers ledit orifice de pression (82) et vers le réservoir (150).

9. Outil d'impact (20) selon la revendication 1, dans lequel ledit corps (25) comprend un passage central (27) avec une paroi périphérique, un passage transversal (114e, 115e) traversant ladite paroi (151) et l'outil de frappe (102) dans ledit passage (27) comprend une fente transversale (105), dans lequel une goupille transversale (104) s'étend à travers ledit passage transversal (114e, 115e) et la fente transversale (105), ladite goupille transversale (104) comprenant : des parties métalliques (111, 112), chacune ayant une dimension de longueur, une surface longitudinale externe incurvée et une surface plate, et une couche de caoutchouc (113) comprenant une paire de surfaces opposées auxquelles adhèrent lesdites surfaces plates, et dans lequel la goupille transversale (104) présente une dimension de hauteur lorsqu'elle n'est pas comprimée et peut être comprimée afin d'obtenir une hauteur inférieure afin d'entrer dans le passage transversal (114e, 115e).

10. Outil d'impact (20) selon la revendication 9, dans lequel chaque partie métallique (111, 112) comprend un trou (114a, 115a) à travers et dans lequel une goupille (114, 115), avec une tête et une tige avec une extrémité arrondie, est placée avec sa tige dans ledit trou (114a, 115a), sa tête contre la couche (113) et sa tige dépassant au-delà de sa partie métallique (111, 112), moyennant quoi la tige est suffisamment rétractable dans le trou (114a, 115a) pour permettre à la goupille (114, 115) d'être en prise avec la partie métallique (111, 112), afin de permettre l'insertion de la goupille transversale (104), puis d'être prolongée dans un évidement interne dans l'outil d'impact (20).
